# EUROPÄISCHE PATENTSCHRIFT

(11) **EP 1 541 881 B1**
(45) Veröffentlichungstag und Bekanntmachung des Hinweises auf die Patenterteilung: **22.07.2015**
(21) Anmeldenummer: 04026938.3
(22) Anmeldetag: 12.11.2004
(51) Int. Cl.: F16B 13/12, E04B 1/76, F16B 13/08, E04F 13/08

(54) **Spreizdübel**
Expansion anchor
Cheville d'expansion

(30) Priorität: 09.12.2003 DE 10357367
(43) Veröffentlichungstag der Anmeldung: 15.06.2005
(73) Patentinhaber: fischerwerke GmbH & Co. KG, 72178 Waldachtal (DE)
(72) Erfinder: Renz, Jürgen, 72202 Nagold (DE); Haug, Willi, 72250 Freudenstadt-Musbach (DE)

(56) Entgegenhaltungen:
- EP-A- 0 546 340
- CH-A5- 671 616
- DE-A1- 2 261 655
- DE-A1- 4 343 329
- DE-A1- 19 651 046
- DE-U1- 8 815 185

## Beschreibung

Die Erfindung betrifft einen Spreizdübel aus Kunststoff insbesondere zur Befestigung einer Dämmstoffplatte oder dgl. an einem Untergrund mit den Merkmalen des Oberbegriffs des Anspruchs 1.

Ein solcher Spreizdübel ist beispielsweise aus DE 196 51 046 A1 bekannt. Der bekannte Spreizdübel ist ein Dämmstoffhalter mit einem durch ein Spreizelement aufspreizbaren Spreizteil sowie einer diesem entgegengesetzten Verlängerung. Das Spreizteil dient insbesondere der Verankerung in einem Untergrund. Die Verlängerung umschließt das Spreizelement und weist einen Halteteller als Kopfflansch zur Bildung eines Widerlagers für den zu befestigenden Dämmstoff auf. Das Spreizteil ist durch zwei Spreizzungen gebildet, die spiegelsymmetrisch angeordnet und durch einen Schlitz getrennt sind.

Der Nachteil derartiger Spreizdübel besteht in den mangelnden Halteeigenschaften in Lochbaustoffen, wie beispielsweise Hochlochziegel, Kalksandlochsteine oder Hohlblocksteine. So hat sich herausgestellt, dass insbesondere bei groben Bohrlöchern und Nagelschrauben als Spreizelement, sich das Spreizelement relativ leicht samt Spreizdübel aus dem Bohrloch lösen lässt.

Der Erfindung liegt daher die Aufgabe zugrunde, einen Spreizdübel zu schaffen, der verbesserte Halteeigenschaften aufweist.

Diese Aufgabe wird erfindungsgemäß durch den Spreizdübel mit den Merkmalen des Anspruchs 1 gelöst. Der erfindungsgemäße Spreizdübel weist eine Ablenkeinrichtung für das Spreizelement auf, das einseitig zwischen den Spreizzungen angeordnet ist. Beim Eintreiben des Spreizelements wird dieses durch die Ablenkeinrichtung relativ zur Längsachse des Spreizdübels zur Seite gedrängt. "Relativ" deshalb, weil in der Praxis beide Elemente - sowohl der Spreizdübel als auch das Spreizelement - aufgrund der wirkenden Kräfte verformt werden. Neben den Werkstoffen und Abmessungen von Spreizdübel und Spreizelement spielt dabei das Bohrloch eine Rolle. So wird beispielsweise bei einem engen Bohrloch in Beton der Spreizbereich wenig und das Spreizelement stark verformt, während in einem Hohlkammerbaustein aufgrund des fehlenden Halts die Verformung eher beim Spreizelement stattfindet. In der Praxis wird aber stets sowohl das Spreizelement entlang seiner Längsachse gebogen als auch der Spreizbereich des Spreizdübels im Gesamten zur Seite verdrängt. Gegenüber einer bloßen symmetrischen Aufspreizung der Spreizzungen zu beiden Seiten hat sich eine derartige Ausgestaltung als deutlich stabilere Verankerung in Lochbaustoffen herausgestellt, ohne dass die Halteeigenschaften im Vollmaterial nennenswert verschlechtert wurden.

Vorzugsweise ist die Ablenkeinrichtung in Form einer keilförmigen Brücke ausgebildet, die zwischen den Spreizzungen angeordnet ist und somit auf dieser Seite zumindest über einen Teil der Länge des Spreizbereichs den Spalt zwischen den Spreizzungen verschließt. Dabei weist die Schrägfläche des Keils derart ins Innere des Spreizbereichs, dass ein Spreizelement beim axialen Eintreiben mit seiner Spitze auf diese Schrägfläche trifft.

Auf der bezüglich der Längsachse des Spreizdübels gegenüberliegenden Seite der Spreizzungen, wo das Spreizelement aufgrund der Ablenkung zwischen den Spreizzungen austritt, ist an diesen vorzugsweise jeweils eine Zahnleiste angeordnet. Dies hat den Vorteil, dass es im Fall der Verwendung einer Schraube oder Nagelschraube zu einer Verhakung zwischen Spreizzunge und Spreizelement kommen kann. Hierdurch wird erreicht, dass sich das Spreizelement auch bei einer dynamischen Beanspruchung der Befestigung, beispielsweise durch Rütteln, nicht gegenüber den Spreizzungen verschieben kann, wodurch es zu einem Lösen der Befestigung kommen könnte. Vorzugsweise wird der Spreizdübel mit einer Nagelschraube eingesetzt, deren Gewinde mit der Form der Zahnleisten korrespondiert, so dass es zu einem optimalen Ineinandergreifen von Nagelschraube und Zahnleisten kommt. Gegenüber Schrauben haben Nagelschrauben insbesondere den Vorteil, dass sie rein schlagend oder in einer Kombination aus Schlägen und einer Drehbewegung eingetrieben werden können. Damit ist beispielsweise die Verwendung eines Hammers oder einer Schlagbohrmaschine zum Eintreiben möglich.

In einer bevorzugten Ausführungsform ist der Spreizbereich zwischen den Spreizzungen durch eine Spritzhaut geschlossen. Dies hat den Vorteil, dass während des Einbringens des Spreizdübels in das Bohrloch das Eindringen von Bohrstaub zumindest weitgehend verhindert wird. Gegenüber einem mit Bohrstaub verunreinigten Spreizbereich werden hierdurch die zum Eintreiben des Spreizelements notwendigen Kräfte aufgrund der verbesserten Reibverhältnisse deutlich vermindert.

Die Erfindung wird nachfolgend anhand eines in der Zeichnung dargestellten Ausführungsbeispiels näher erläutert. Es zeigen:
- Figur 1: eine perspektivische Darstellung des erfindungsgemäßen Spreizdübels;
- Figur 2: eine Schnittdarstellung des selben Spreizdübels mit einem Spreizelement.

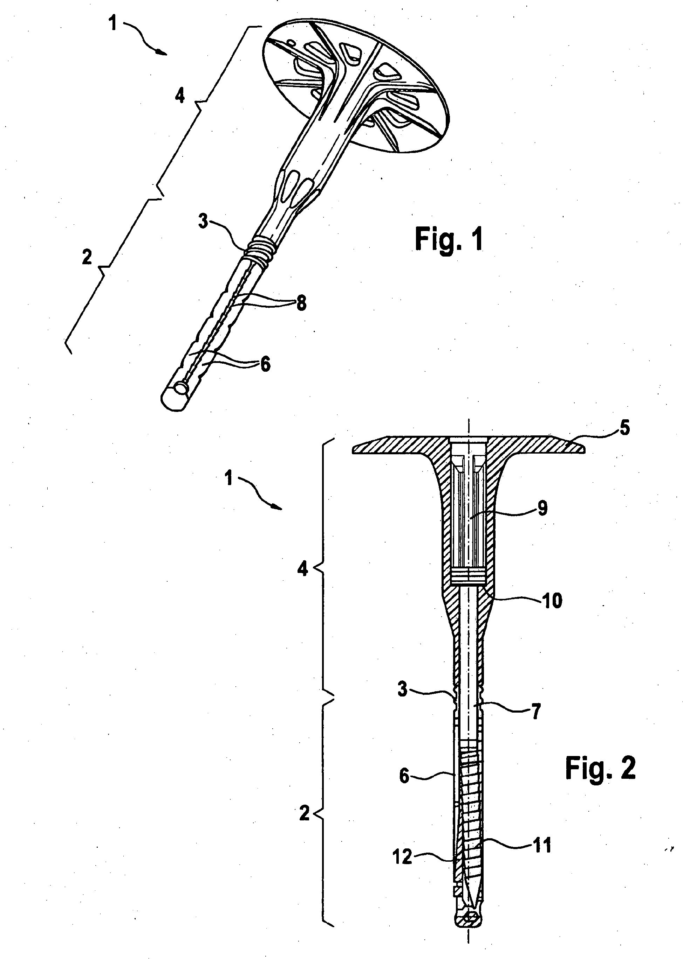

Der in Figur 1 dargestellte Spreizdübel 1 zur Befestigung einer Dämmstoffplatte (nicht dargestellt) an einem Untergrund (nicht dargestellt) umfasst einen Spreizbereich 2, und hieran anschließend eine Stauchzone 3, eine Verlängerung 4 sowie einen Kopfflansch 5. Der Spreizbereich 2 weist zwei Spreizzungen 6 auf, die durch Einbringen eines Spreizelements 7 (siehe Figur 2) aufgespreizt werden können. Auf der in der Darstellung zugewandten Seite weisen die Spreizzungen 6 jeweils eine Zahnung 8 auf, deren Zähne jeweils längs versetzt zueinander sich gegenüberliegend angeordnet sind.

Zur Erstellung einer Befestigung wird zunächst ein Bohrloch in der Dämmstoffplatte und im Untergrund erstellt. Im Weiteren wird der Spreizdübel 1 mit dem Spreizbereich 2 voran in dieses Bohrloch gesteckt. Zur eigentlichen Verankerung wird das Spreizelement 7 eingetrieben und zwar vorzugsweise mit einer kombinierten Dreh-Schlag-Bewegung, also beispielsweise mit einer Schlagbohrmaschine. Hierdurch verspreizen sich die Spreizzungen 6 gegen die Bohrlochwand und der Spreizdübel 1 wird abschließend im Bereich der Stauchzone 3 gestaucht. Dies bewirkt, dass der Kopfflansch 5 in Richtung des Untergrunds gezogen und dadurch die Dämmstoffplatte komprimiert wird. Dies hat den Effekt, dass der Kopfflansch 5 gegenüber dem umgebenden Bereich der Dämmstoffplatte versenkt wird. Beim Verputzen der Dämmstoffplatte ist somit ein dünner Putzauftrag ausreichend, um eine gleichmäßige Oberfläche zu erreichen.

Figur 2 zeigt eine Schnittdarstellung des Spreizdübels 1 während der Verankerung, wobei die Schnittebene zwischen den beiden Spreizzungen 6 verläuft. Das Spreizelement 7, eine Nagelschraube, liegt mit Ihrem bolzenartigen Kopf 9 an einem Anschlag 10 des Spreizdübels 1 an. Durch ein weiteres Eintreiben des Spreizelements 7 wird der Spreizdübel 1 im Bereich der Stauchzone 3 verkürzt und damit der Kopfflansch 5 zum Verankerungsgrund gezogen. Der Gewindeteil 11 des Spreizelements 7 verspreizt die beiden Spreizzungen 6 senkrecht zur Darstellungsebene. Aufgrund der keilförmigen Ablenkeinrichtung 12 wird das Spreizelement 7 gegenüber dem Spreizbereich 2 des Spreizdübels 1 radial parallel zur Darstellungsebene verschoben, hier dargestellt durch eine Krümmung des Spreizelements 7. In der Realität wird sich gleichzeitig eine zumindest geringfügige Verformung auch des Spreizbereichs 2 einstellen. Durch diese radiale Verschiebung kommt der Gewindeteil 11 des Spreizelements 7 mit der Zahnung 8 der Spreizzungen in Eingriff. Diese formschlüssige Verbindung verhindert insbesondere bei einer Rüttelbewegung am Kopfflansch 5 ein Herausarbeiten des Spreizelements 7 bei Untergründen mit hohem Lochanteil (z.B. Kalksandlochsteine). Die Zahnung 8 ist in ihrer Geometrie entsprechend dem Gewindeteil 11 des Spreizelements 7 geformt.

Die Ablenkeinrichtung 12 ist als Brücke zwischen den beiden Spreizzungen 6 ausgeformt. Im Übrigen sind die Spreizzungen 6 durch eine sehr dünne Spritzhaut (nicht dargestellt) derart verbunden, dass sich bis zum Verspreizen ein geschlossener Innenraum ergibt. Dies hat den Vorteil, dass das Spreizelement 7 ungehindert von eindringendem Bohrmehl oder dgl. in den Spreizbereich 2 eingetrieben werden kann. Ansonsten bestünde die Gefahr, dass es durch eindringendes Bohrmehl zu einer erheblichen Erhöhung der Reibung zwischen Spreizelement 7 und dem Inneren des Spreizdübels 1 kommt. Durch die erhöhte Reibung käme es zu überhöhten Kräften und/oder Momenten und damit leicht zu einem Versagen des Spreizelements 7.

## Patentansprüche

1. Spreizdübel (1) aus Kunststoff, insbesondere zur Befestigung einer Dämmstoffplatte oder dgl. an einem Untergrund, mit einem durch Einbringen eines stiftartigen Spreizelements (7) aufspreizbaren, zwei Spreizzungen (6) aufweisenden Spreizbereich (2), an den sich eine entgegen seinem Einführende gerichtete und das Spreizelement (7) umschließende Verlängerung (4) mit einem Kopfflansch (5) anschließt, **dadurch gekennzeichnet, dass** zwischen den Spreizzungen (6) eine Ablenkeinrichtung (12) angeordnet ist, derart, dass das Spreizelement (7) beim Einbringen gegenüber dem Spreizbereich (2) radial und senkrecht zur Aufspreizrichtung der Spreizzungen verschoben wird.

2. Spreizdübel nach Anspruch 1, **dadurch gekennzeichnet, dass** die Ablenkeinrichtung (12) in Form einer keilförmigen Brücke zwischen den Spreizzungen (6) ausgebildet ist.

3. Spreizdübel nach Anspruch 1, **dadurch gekennzeichnet, dass** die Spreizzungen (6) auf der der Ablenkeinrichtung (12) gegenüberliegenden Seite jeweils eine Zahnleiste (8) aufweisen.

4. Spreizdübel nach Anspruch 3, **dadurch gekennzeichnet, dass** der Spreizdübel als Spreizelement (7) eine Nagelschraube mit einem mit der Zahnleiste (8) korrespondierenden Gewinde aufweist.

5. Spreizdübel nach Anspruch 1, **dadurch gekennzeichnet, dass** der Spreizbereich (2) zwischen den Spreizzungen (6) durch eine Spritzhaut geschlossen ist.

## Claims

1. Expansible fixing plug (1) made of plastics material, especially for affixing a panel of insulating material or the like to a substrate, having an expansion region (2) which has two expansion tongues (6) and which is arranged to be spread apart by the introduction of a pin-like expander element (7), which expansion region (2) is adjoined by an extension piece (4) which is directed in the opposite direction to the insertion end and surrounds the expander element (7) and has a head flange (5), **characterized in that** a diverter device (12) is arranged between the expansion tongues (6) in such a way that the expander element (7), on introduction, is displaced radially relative to the expansion region (2) and perpendicularly with respect to the direction of spreading-apart of the expansion tongues.

2. Expansible fixing plug according to claim 1, **characterized in that** the diverter device (12) is in the form of a wedge-shaped bridge between the expansion tongues (6).

3. Expansible fixing plug according to claim 1, **characterized in that** the expansion tongues (6) each have a toothed strip (8) on the side opposite from the diverter device (12).

4. Expansible fixing plug according to claim 3, **characterized in that** the expansible fixing plug has as expander element (7) a screw nail having a thread that corresponds to the toothed strip (8).

5. Expansible fixing plug according to claim 1, **characterized in that** the expansion region (2) between the expansion tongues (6) is closed by an injection-moulded skin.

## Revendications

1. Cheville expansible (1) en matière plastique, notamment dévolue à la fixation d'un panneau isolant ou d'un élément similaire à une structure sous-jacente, munie d'une zone déployable (2) qui est pourvue de deux languettes déployables (6), est apte au déploiement par insertion d'un élément d'écartement (7) du type pointeau, et à laquelle se rattache un prolongement (4) dirigé en sens inverse de son extrémité d'insertion, doté d'une collerette frontale (5) et ceinturant ledit élément d'écartement (7), **caractérisée par le fait qu'**un dispositif déflecteur (12) est intercalé entre les languettes déployables (6) de façon telle que, lors de l'insertion, l'élément d'écartement (7) soit animé d'un coulissement radial par rapport à la zone déployable (2) et perpendiculaire à la direction d'expansion desdites languettes déployables.

2. Cheville expansible selon la revendication 1, **caractérisée par le fait que** le dispositif déflecteur (12) est réalisé sous la forme d'un entretoisement cunéiforme entre les languettes déployables (6).

3. Cheville expansible selon la revendication 1, **caractérisée par le fait que** les languettes déployables (6) sont respectivement munies d'une barrette dentée (8) du côté opposé au dispositif déflecteur (12).

4. Cheville expansible selon la revendication 3, **caractérisée par le fait que** ladite cheville expansible présente, en tant qu'élément d'écartement (7), un clou fileté pourvu d'un filetage concordant avec la barrette dentée (8).

5. Cheville expansible selon la revendication 1, **caractérisée par le fait que** la zone déployable (2) est fermée, entre les languettes déployables (6), par une pellicule venue d'injection.
